# FASCICULE DE BREVET EUROPEEN

(11) **EP 4 196 253 B1**
(45) Date de publication et mention de la délivrance du brevet: **15.05.2024**
(21) Numéro de dépôt: 21790957.1
(22) Date de dépôt: 22.09.2021
(51) Int. Cl.: B01J 8/02, B01J 8/06

(54) **REACTEUR TUBULAIRE A LIT FIXE**
FESTBETT-ROHRREAKTOR
FIXED-BED TUBULAR REACTOR

(30) Priorité: 29.09.2020 FR 2009861
(43) Date de publication de la demande: 21.06.2023
(73) Titulaire: Commissariat à l'énergie atomique et aux énergies alternatives, 75015 Paris (FR)
(72) Inventeur: CHAISE, Albin, 38054 GRENOBLE CEDEX 09 (FR); BENGAOUER, Alain, 38054 GRENOBLE CEDEX 09 (FR); DUCROS, Frédéric, 38054 GRENOBLE CEDEX 09 (FR)
(74) Mandataire: Brevalex
(86) Numéro de dépôt international: PCT/FR2021/051624
(87) Numéro de publication internationale: WO 2022/069816

(56) Documents cités:
- WO-A1-2017/180957
- FR-A1- 2 924 624
- US-A1- 2011 165 483

## Description

### DOMAINE TECHNIQUE

La présente invention se rapporte au domaine des réacteurs échangeurs. En particulier, la présente invention se rapporte au domaine des réacteurs échangeurs catalytiques mettant en oeuvre un catalyseur solide, et notamment un catalyseur solide sous forme de poudre.

La présente invention propose à cet égard un réacteur échangeur catalytique susceptible de mettre en oeuvre des procédés de synthèses organiques exothermiques. Ces composés organiques peuvent notamment comprendre des carburants de synthèse et du combustible.

### ÉTAT DE LA TECHNIQUE ANTÉRIEURE

Les réacteurs catalytiques utilisant des catalyseurs solides sont largement mis en œuvre pour la synthèse de composés organiques tels que les carburants de synthèse ou les combustibles parmi lesquels on peut citer les substituts de gaz naturel, le diméthyléther ou encore le méthanol.

Ces composés sont notamment obtenus par réaction d'hydrogène et d'oxyde de carbone en présence d'un catalyseur solide approprié.

Toutefois, les réactions chimiques relatives à la synthèse de ces composés sont très exothermiques, et dégagent une quantité de chaleur susceptible de dégrader le catalyseur solide. Cette dégradation du catalyseur solide se traduit notamment par une désactivation de ce dernier, et conduit à une réduction du taux de conversion des espèces chimiques en présence. La sélectivité des réactions mises en jeu est également affectée.

En pratique, ces réactions peuvent être mises en oeuvre dans un réacteur-échangeur du type tube-calandre qui comprend un canal réactif pourvu du catalyseur solide et refroidi continûment par un fluide caloporteur. Dans ce type de réacteur, les gaz réactifs circulent axialement dans les tubes qui contiennent un catalyseur, par exemple en poudre.

Néanmoins, en dépit de la mise en oeuvre d'un refroidissement par le fluide caloporteur, ce type de réacteur reste sensible à la chaleur dégagée par les réactions se produisant dans ledit réacteur.

En particulier, un point chaud, généralement observé à proximité de l'entrée des gaz réactifs, dégrade le catalyseur solide, et réduit donc les performances du réacteur-échangeur.

Afin de pallier ces problèmes, il alors été proposé un agencement permettant de répartir la distribution des réactifs sur toute la longueur des tubes. Cette solution permet alors d'obtenir une meilleure homogénéité de la température sur toute la longueur du réacteur.

A cet égard, les documents US3758279, US4374094, EP0560157, IT8021172 et US2997374 proposent des réacteurs-échangeurs mettant en oeuvre une distribution des réactifs à partir d'un espace de distribution annulaire. Notamment, ces réacteurs-échangeurs, de forme généralement cylindrique, comprennent, agencés de manière coaxiale et à partir de l'extérieur du réacteur, un tube, l'espace de distribution annulaire, une charge de catalyseur et un espace de collecte.

Cet agencement n'est toutefois pas satisfaisant.

En effet, la présence de l'espace de distribution annulaire disposé autour de la charge de catalyseur, limite les transferts de chaleur du catalyseur vers le tube rendant peu efficace les systèmes de refroidissement généralement considérés. Il reste néanmoins possible d'insérer des éléments conducteurs de chaleur dans le réacteur. Une telle solution reste toutefois incompatible avec les réacteurs comprenant des tubes de faible diamètre.

Inversement, le document CN103990420 propose de mettre en œuvre un insert pourvu d'une chambre de distribution et d'une chambre de collecte, disposée au centre d'un tube et définissant avec ce dernier une espace annulaire logeant le catalyseur solide.

Toutefois, l'agencement proposé dans ce document ne permet pas de répartir de manière homogène au sein de l'espace annulaire. Plus particulièrement, cet agencement ne permet pas d'obtenir un profil de température optimal au sein du catalyseur solide.

La figure 1 du document US 8961909 représente un autre exemple de réacteur du type tube-calandre. Ce réacteur est notamment pourvu d'un tube d'injection, plongé dans un lit de poudre catalytique, et long duquel sont ménagés des perçages. Ces derniers sont notamment agencés pour assurer une injection du gaz réactif à différents niveaux du lit de poudre catalytique, et ainsi limiter l'apparition de points chauds dans ledit lit.

Toutefois, ce réacteur n'est pas satisfaisant.

En effet, afin d'assurer son refroidissement, ce réacteur requiert la mise en place d'une pluralité de circuits de circulation d'un fluide caloporteur, qui augmentent d'autant sa complexité.

Le document US7402719divulgue un autre exemple de réacteur agencé pour permettre une injection étagée d'un réactif C en vue de sa réaction avec un réactif A. Ce réacteur comprend à cet égard deux nappes (ou canaux) séparées par une paroi et destinées à assurer la circulation, respectivement, du réactif A et du réactif C. Les deux nappes sont par ailleurs en communication fluidique au moyen d'une pluralité de perçages ménagés dans la paroi les séparant. Ces perçages sont notamment agencés afin d'assurer un mélange progressif du réactif C avec le réactif A. Ce mélange progressif permet ainsi de limiter l'apparition de points chauds. Cependant, l'agencement du réacteur sous forme d'un empilement de nappes rend ce dernier peu compact. US2011/165483 décrit un réacteur tubulaire avec une chambre de distribution et une chambre de collecte.

Un but de la présente invention est de proposer un réacteur tubulaire à lit fixe permettant une distribution plus uniforme des réactifs au sein du catalyseur solide.

Un autre but de la présente invention est également de proposer un réacteur tubulaire à lit fixe permettant une répartition plus homogène du flux de chaleur généré au sein du catalyseur solide.

Un autre but de la présente invention est également de proposer un réacteur tubulaire permettant une meilleure gestion du refroidissement.

Un autre but de la présente invention est également de proposer un réacteur tubulaire pour lequel la fiabilité et la durée de vie sont améliorées au regard des réacteurs connus de l'état de la technique.

Un autre but de la présente invention est de proposer un réacteur tubulaire permettant d'optimiser (augmenter) le temps de passage des gaz dans le lit fixe de poudre catalytique.

### EXPOSÉ DE L'INVENTION

Les buts de la présente invention sont, au moins en partie, atteints par un réacteur tubulaire à lit fixe qui s'étend, selon un axe longitudinal XX', entre une première extrémité et une deuxième extrémité, ledit réacteur comprend un lit de poudre catalytique confiné dans un espace annulaire délimité par une paroi interne, dite première paroi, d'un tube creux et une paroi externe, dite une deuxième paroi, d'un insert creux disposé de manière coaxiale dans le tube creux,
l'insert creux comprend au moins une chambre de distribution et au moins une chambre de collecte, séparées l'une de l'autre par au moins une paroi séparatrice, et comprenant, respectivement, une ouverture d'admission de gaz au niveau de la première extrémité et une ouverture d'évacuation de gaz au niveau de la deuxième extrémité,

l'au moins une chambre de distribution est pourvue d'une pluralité d'ouvertures distributrices tandis que l'au moins une chambre de collecte est pourvue d'une ouverture collectrice, la pluralité d'ouvertures distributrices et l'ouverture collectrice de chaque chambre de collecte sont formées au niveau de la deuxième paroi et s'étendent parallèlement à l'axe longitudinal XX', les ouvertures distributrices d'une chambre de distribution permettant la distribution d'un gaz susceptible d'être admis par l'ouverture d'admission de ladite chambre de distribution vers l'espace annulaire, et l'ouverture collectrice permettant la collecte du gaz distribué dans l'espace annulaire par la chambre de collecte.

Chaque ouverture distributrice et/ou chaque ouverture collectrice peut être formée par une unique ouverture,

De manière alternative, une ouverture distributrice et/ou une ouverture collectrice peut comprendre une pluralité d'ouverture, par exemple alignées selon sa direction d'extension.

Selon un mode de mise en œuvre, chaque ouverture distributrice de la pluralité des ouvertures distributrices de l'au moins une chambre de distribution est conformée pour imposer une perte de charge au gaz susceptible d'être admis dans la chambre de distribution de sorte que le débit dudit gaz soit fonction du parcours, dit parcours réactif, dudit gaz dans l'espace annulaire entre l'ouverture distributrice considérée et l'ouverture collectrice.

Selon un mode de mise en œuvre, la perte de charge augmente lorsque le parcours réactif diminue.

Selon un mode de mise en œuvre, la perte de charge augmente lorsque le parcours réactif augmente.

Selon un mode de mise en œuvre, la perte de charge associée à une ouverture distributrice donnée est ajustée par sa section et/ou sa longueur.

Selon un mode de mise en œuvre, un élément poreux est logé dans l'ouverture distributrice, l'élément poreux présentant une porosité permettant d'imposer la perte de charge.

Selon un mode de mise en œuvre, l'élément poreux peut comprendre au moins un des matériaux choisis parmi : un matériau fibreux, notamment une laine, une tresse ou un tissu métallique ou céramique.

Selon un mode de mise en oeuvre, ledit réacteur est pourvu d'un film poreux en recouvrement de la deuxième paroi, et agencé pour prévenir un passage de poudre du lit de poudre catalytique à travers les ouvertures distributrices ou l'ouverture collectrice.

Selon un mode de mise en œuvre, l'au moins une chambre de distribution est obturée au niveau de la deuxième extrémité, et l'au moins une chambre de collecte est obturée au niveau de la première extrémité.

Selon un mode de mise en œuvre, ledit réacteur comprend au niveau de la première extrémité et au niveau de la deuxième extrémité, respectivement, un espace distributeur et un espace collecteur entre lesquels l'insert est disposé.

Selon un mode de mise en oeuvre, la poudre catalytique est retenue dans l'espace annulaire par un joint en matière fibreuse au niveau de chacune des extrémités de l'espace annulaire, avantageusement, le joint en matière fibreuse est maintenu en compression contre la poudre catalytique par un ressort, le ressort étant en butée contre une plaque de maintien lié mécaniquement au tube.

Selon un mode de mise en oeuvre, la deuxième paroi est dépourvue d'ouverture sur une première section et une deuxième section qui s'étendent à partir, respectivement, de la première extrémité et de la deuxième extrémité, la première section et la deuxième section étant en recouvrement avec le lit de poudre sur une hauteur H1, la hauteur H1 étant comprise entre 0,2 fois et 10 fois, avantageusement comprise entre 1 fois et 2 fois, la distance D₁ séparant une ouverture de distribution d'une ouverture collectrice immédiatement adjacente, et mesurée le long de la surface externe de la paroi externe.

Selon un mode de mise en œuvre, l'insert creux est muni de moyens de centrage maintenant ce dernier en position coaxiale avec le tube creux, de manière avantageuse, les moyens de centrage comprennent des bossages formés sur la deuxième paroi.

Selon un mode de mise en œuvre, l'ouverture collectrice et les ouvertures de distributrices présentent une largeur comprise entre 1/1.00 et 1/2, avantageusement comprise entre 1/20 et 1/4, du diamètre du tube creux.

Selon un mode de mise en œuvre, l'insert creux forme une pièce monobloc.

### BRÈVE DESCRIPTION DES DESSINS

D'autres caractéristiques et avantages apparaîtront dans la description qui va suivre du réacteur tubulaire à lit fixe selon l'invention, donnés à titre d'exemples non limitatifs, en référence aux dessins annexés dans lesquels :
La figure 1 est une représentation schématique d'un réacteur tubulaire à lit fixe selon la présente invention, en particulier, la figure 1 représente le réacteur selon un plan de coupe longitudinal passant par un axe longitudinal XX' dudit réacteur ;
La figure 2 est une vue en coupe selon un plan transversal, perpendiculaire à l'axe longitudinal XX' du réacteur tubulaire de la figure 1, selon cette représentation, le réacteur tubulaire comprend deux chambres de distribution et deux chambres de collecte, les flèches symbolisent le sens de circulation du ou des gaz dans l'espace annulaire ;
La figure 3 est une représentation schématique d'un insert selon la présente invention, en particulier, la ligne en traits discontinus représente une paroi séparatrice séparant une chambre de distribution et une chambre de collecte ;
La figure 4 est une vue en coupe selon un plan transversal, perpendiculaire à l'axe longitudinal XX' du réacteur tubulaire selon une première variante de la présente invention ;
La figure 5 est une vue en coupe selon un plan transversal, perpendiculaire à l'axe longitudinal XX' du réacteur tubulaire selon une deuxième variante de la présente invention ;
La figure 6 est une représentation d'un élément poreux, et notamment d'un élément poreux formé de 4 plans de fibres, susceptible d'être mis en oeuvre dans le réacteur tubulaire selon la présente invention ;
La figure 7 est une représentation schématique d'un réacteur tubulaire à lit fixe selon un autre exemple de la présente invention, en particulier, la figure 7 représente le réacteur selon un plan coupe longitudinal passant par un axe longitudinal XX' dudit réacteur.
La figure 8 est une représentation schématique d'un réacteur tubulaire à lit fixe selon un autre exemple de la présente invention, en particulier, la figure 8 représente le réacteur selon un plan coupe longitudinal passant par un axe longitudinal XX' dudit réacteur.

### EXPOSÉ DÉTAILLÉ DE MODES DE RÉALISATION PARTICULIERS

La présente invention concerne un réacteur-échangeur tubulaire à lit de poudre catalytique fixe. Notamment le lit de poudre catalytique est confiné dans un espace annulaire délimité par une première paroi d'un tube creux et une deuxième paroi d'un insert creux logé de manière coaxiale dans ledit tube.

L'insert creux selon la présente invention est notamment agencé pour permettre une admission de gaz réactifs selon une première extrémité du réacteur dans une chambre de distribution dudit insert.

Ces derniers sont ensuite distribués dans l'espace annulaire par une pluralité d'ouvertures distributrices permettant un passage desdits gaz de la chambre de distribution vers ledit espace annulaire.

Les produits issus de la réaction entre espèces réactives sont ensuite collectés, par l'intermédiaire d'une ouverture collectrice, dans une chambre de collecte de l'insert creux, isolée de la chambre de distribution par une paroi séparatrice.

L'évacuation des produits s'effectue par une ouverture d'évacuation de la chambre de collecte au niveau de la deuxième extrémité.

La mise en œuvre d'une pluralité d'ouvertures distributrices permet de répartir la distribution de gaz réactif, à partir d'une même chambre de distribution, en différents endroits du lit de poudre catalytique. Ce mode de distribution limite ainsi l'apparition de points chauds et préserve les performances du lit de poudre catalytique.

Par ailleurs, la considération d'une pluralité d'ouvertures distributrices permet de limiter le nombre de chambres de distribution et de collection et par voie de conséquence de simplifier l'architecture du réacteur-échangeur tubulaire à lit de poudre catalytique fixe.

Selon un autre aspect de la présente invention, chaque ouverture distributrice de la pluralité d'ouvertures distributrices de la chambre de distribution est conformée pour imposer une perte de charge au gaz susceptible d'être admis dans la chambre de distribution de sorte le débit de ce dernier soit fonction du parcours, dit parcours réactif, dudit gaz dans l'espace annulaire entre l'ouverture distributrice considérée et l'ouverture collectrice. Notamment, cette perte de charge peut augmenter lorsque le parcours réactif diminue. Inversement, la perte de charge peut augmenter lorsque le parcours réactif augmente.

Les avantages associés aux différents aspects de la présente invention apparaîtront plus clairement à la lecture de la description détaillée qui suit.

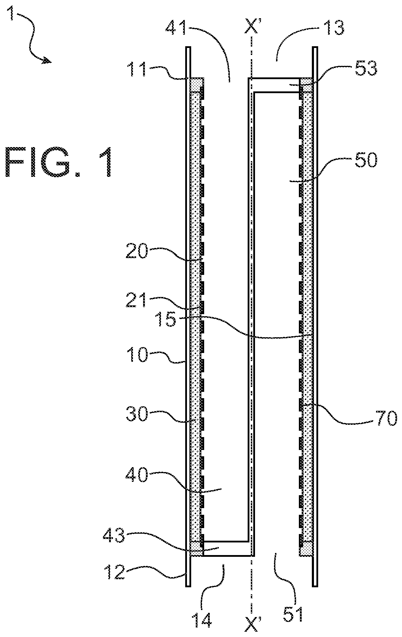

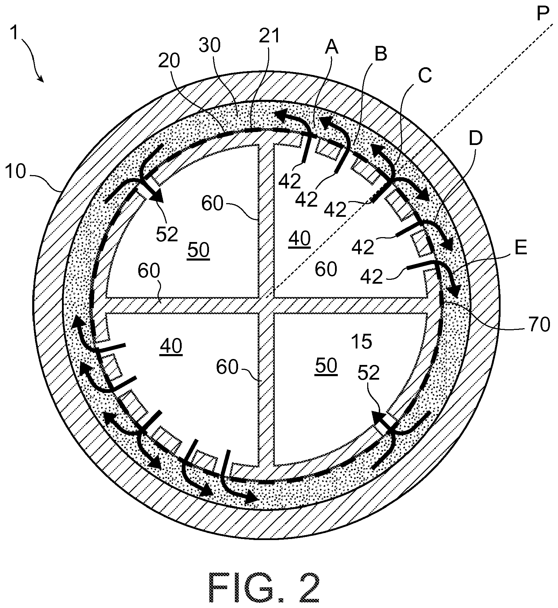

Ainsi, aux figures 1 et 2, on peut voir un exemple de réalisation d'un réacteur tubulaire à lit fixe selon la présente invention.

Le réacteur tubulaire 1 selon la présente invention comprend un tube creux 10 qui, s'étend selon un axe longitudinal XX', entre une première extrémité 11 et une deuxième extrémité 12. Il est entendu que l'axe longitudinal XX' est également un axe de révolution du tube creux.

Le tube creux 10 peut présenter une symétrie de révolution autour de l'axe longitudinal XX'.

Le tube creux 10 peut comprendre un métal, et notamment un métal choisi parmi : acier, alliage d'aluminium, de cuivre, de nickel.

Le diamètre de la surface interne, dite première surface, du tube creux peut être compris entre 5 mm et 100 mm.

La paroi, dite première paroi 15, formant le tube creux 10 peut présenter une épaisseur comprise entre 0,5 mm et 10 mm.

Le tube creux 10 peut présenter une longueur comprise entre 10 fois et 200 fois le diamètre de la première surface.

Le réacteur tubulaire 1 comprend également un insert creux 20 qui s'étend également selon l'axe longitudinal XX' et présente une forme généralement cylindrique.

L'insert creux 20 est notamment logé dans le volume V du tube creux de manière coaxiale à ce dernier. En particulier, l'insert 20 comprend également une paroi, dite deuxième paroi 21, qui délimite avec la première paroi 15 un espace annulaire 30.

L'espace annulaire 30 est, à cet égard, rempli d'une poudre catalytique qui sera le siège des réactions de conversion de gaz réactifs susceptibles de transiter dans le réacteur tubulaire 1.

L'espace annulaire 30 peut présenter une épaisseur, définie comme la distance entre la première paroi 15 et la deuxième paroi 21, comprise entre 2% et 20 % du diamètre de la première surface.

L'insert creux 20 peut être une pièce monobloc.

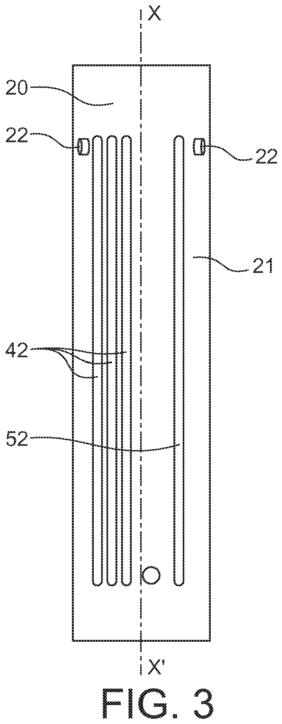

De manière particulièrement avantageuse, l'insert creux 20 peut être muni de moyens de centrage maintenant ce dernier en position coaxiale avec le tube creux. Par exemple, tel que représenté à la figure 3 les moyens de centrage comprennent des bossages 22 formés sur la deuxième paroi.

Ces moyens de centrage permettent notamment de considérer un insert creux d'une longueur au moins 20 fois supérieure au diamètre dudit insert.

Par ailleurs, ces moyens permettent également de faciliter le montage du réacteur tubulaire 1.

L'insert creux 20 comprend par ailleurs au moins une chambre de distribution 40 et au moins une chambre de collecte 50. Notamment, l'insert creux 20 peut comprendre entre 1 et 4 chambres de distribution 40 et entre 1 et 4 chambres de collecte 50.

Les chambres de distribution 40 et les chambres de collecte 50 sont avantageusement disposées en alternance, et s'étendent sur toute la longueur de l'insert creux 20. Les chambres de collecte 50 et de distribution 40 sont par ailleurs séparées les unes des autres par des parois séparatrices 60.

Par exemple, les parois séparatrices 60 forment des plans passant par l'axe longitudinal XX'.

Il est donc entendu qu'une chambre de distribution 40 est délimitée par deux parois séparatrices 60 et une section de la deuxième paroi 21.

De manière équivalente, une chambre de collecte 50 est également délimitée par deux parois séparatrices 60 et une autre section de la deuxième paroi 21.

Par ailleurs, les parois séparatrices 60 s'étendent sur toute la longueur de l'insert creux dans le volume défini par l'insert creux 20, et sont agencées pour prévenir tout passage direct de gaz d'une chambre à l'autre.

En outre, l'au moins une chambre de distribution 40 comprend une ouverture d'admission 41 au niveau de la première extrémité 11 dudit insert 20 par laquelle un ou des gaz réactifs sont susceptibles d'être admis.

De manière équivalente, l'au moins une chambre de collecte 50 comprend une ouverture d'évacuation 51 au niveau de la deuxième extrémité 12 de l'insert creux 20 et par laquelle un ou plusieurs gaz sont susceptibles d'être évacués.

L'insert creux 20 est également pourvu d'une pluralité d'ouvertures distributrices 42 et d'au moins une ouverture collectrice 52.

En particulier, chaque chambre de distribution 40 comprend une pluralité d'ouvertures distributrices 42 (figures 2 et 3) formées au niveau de la deuxième paroi 21, et qui s'étendent parallèlement à l'axe longitudinal XX'. La pluralité d'ouvertures distributrices 42 d'une chambre de distribution 40 donnée est notamment formée de manière à rendre communiquant la chambre de distribution 40 considérée et l'espace annulaire 30. Dit autrement, la pluralité d'ouvertures distributrices 42 forment autant de passages perméables aux gaz réactifs de la chambre distributrice 40 vers l'espace annulaire 30.

Chaque ouverture distributrice peut être formée par une unique ouverture,
De manière alternative, une ouverture distributrice peut comprendre une pluralité d'ouvertures, par exemple alignées selon sa direction d'extension.

De manière équivalente, chaque chambre de collecte 50 comprend une ouverture collectrice 52 (figures 2 et 3) formée au niveau de la deuxième paroi 21, et qui s'étend parallèlement à l'axe longitudinal XX'. L'ouverture collectrice 52 d'une chambre de collecte 50 donnée est notamment formée de manière à rendre communiquant la chambre de collecte 50 considérée et l'espace annulaire. Dit autrement, l'ouverture collectrice 52 forme un passage perméable aux gaz de l'espace annulaire 30 vers la chambre de collecte 50.

Chaque ouverture collectrice peut être formée par une unique ouverture,
De manière alternative, une ouverture collectrice peut comprendre une pluralité d'ouvertures, par exemple alignées selon sa direction d'extension.

Ainsi, les ouvertures distributrices 42 d'une chambre de distribution 40 permettent la distribution d'un gaz susceptible d'être admis par l'ouverture d'admission 41 de ladite chambre de distribution vers l'espace annulaire 30, tandis que l'ouverture collectrice 52 permet la collecte du gaz distribué dans l'espace annulaire 30 par la chambre de collecte.

Plus particulièrement, la multiplicité des ouvertures distributrices 42 associées à une chambre de distribution donnée permet ainsi d'injecter un gaz réactif dans l'espace annulaire 30 en différentes zones (zones A, B, C, D, et E figure 2) dudit espace 30. Cette répartition des zones d'injection de gaz permet de reproduire le principe d'une injection étagée et ainsi limiter l'apparition d'échauffements locaux (points chauds) au niveau de la zone annulaire 30. Cette limitation d'échauffement prévient également tout phénomène de frittage de la poudre catalytique présente dans l'espace annulaire.

La considération d'une pluralité d'ouvertures distributrices 42 par chambre de distribution 40 permet d'envisager un insert creux 20 limité à une unique, voire deux, chambres de distribution. Un tel agencement permet par ailleurs de simplifier la fabrication de l'insert creux 20.

De manière avantageuse, les ouvertures distributrices 42 et collectrice 52 s'étendent sur une longueur L, et parallèlement à l'axe longitudinal XX'.

Avantageusement, la longueur L est supérieure à la moitié, avantageusement aux trois quarts de la longueur d'extension selon l'axe longitudinal XX' de l'espace annulaire 30.

L'extension des ouvertures distributrices 42 sur la longueur L permet également d'étaler l'injection de gaz dans l'espace annulaire 30 et ainsi limiter l'apparition de points chauds.

De manière avantageuse, les ouvertures distributrices 42 d'une chambre de distribution 40 donnée peuvent être agencées de manière symétrique par rapport à un plan bissecteur P des parois 60 délimitant ladite chambre (figure 2).

Plus particulièrement, chaque chambre de distribution peut comprendre un nombre impair d'ouvertures distributrices 42. Selon cet agencement, une des ouvertures distributrices 42, dite ouverture centrale, est disposée à l'intersection du plan bissecteur et de la deuxième paroi 21, tandis que les autres ouvertures de la pluralité d'ouvertures 42 sont disposées symétriquement de part et d'autre dudit plan bissecteur.

À titre d'exemple, et tel qu'illustré à la figure 2, chaque chambre de distribution 42 comprend cinq ouvertures distributrices 42.

De manière avantageuse, le réacteur-tubulaire 1 comprend un filtre agencé pour prévenir le passage de la poudre catalytique dans les chambres de distribution 40 ou de collecte 50.

Par exemple, tel qu'illustré à la figure 3, un filtre 70 peut être disposé en recouvrement de la deuxième paroi 21.

De manière particulièrement avantageuse, chaque ouverture distributrice 42 de la pluralité des ouvertures distributrices d'une chambre de distribution 40 est conformée pour imposer une perte de charge au gaz susceptible d'être admis dans ladite chambre de distribution 40 qui est fonction du parcours, dit parcours réactif, dudit gaz dans l'espace annulaire 30 entre l'ouverture distributrice 42 considérée et l'ouverture collectrice 52.

En particulier, la perte de charge peut augmenter lorsque le parcours réactif diminue. Ainsi, en relation avec la figure 2, la perte de charge imposée par les ouvertures distributrices 42 en positions A et E peut être plus importante que la perte de charge imposée par l'ouverture en position C. Les ouvertures 42 en positions B et D peuvent imposer, pour leur part, une perte de charge intermédiaire entre celle imposée aux positions A et E d'une part et la position C d'autre part.

L'ajustement des pertes de charge en fonction du parcours réactif permet ainsi de mieux contrôler les débits de gaz lors de leur distribution dans l'espace annulaire.

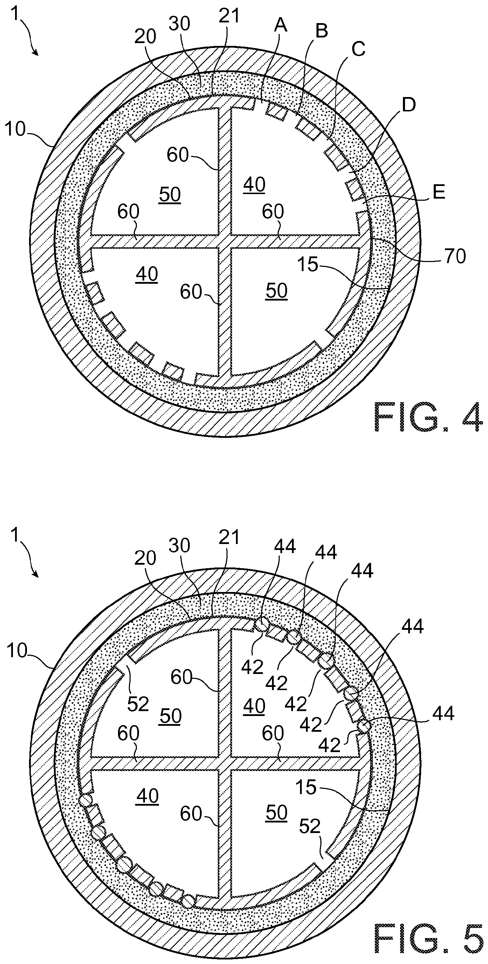

Selon une première variante illustrée à la figure 4, la perte de charge associée à une ouverture distributrice donnée est ajustée par sa section et/ou sa longueur L. Plus particulièrement, la perte de charge d'une ouverture augmente au fur et à mesure que sa section et/ou sa longueur L diminue.

Selon une deuxième variante illustrée à la figure 5, des éléments poreux 44 sont logés dans chacune des ouvertures distributrices. En particulier, chaque élément, poreux 44 présente une porosité permettant d'imposer une perte de charge prédéterminée. À cet égard, l'élément poreux peut comprendre au moins un des matériaux choisi parmi : un matériau fibreux, notamment une laine, une tresse ou un tissu métallique ou céramique. De manière alternative, l'élément poreux associé à une ouverture distributrice donnée peut être formé directement avec l'insert creux.

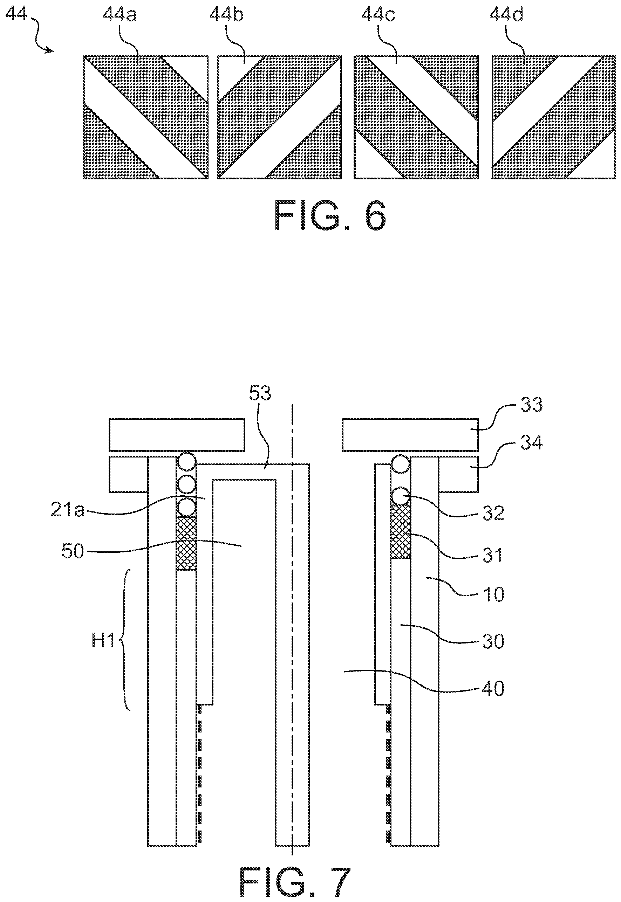

Selon cette dernière configuration, et tel qu'illustré à la figure 6, l'élément poreux 44 peut comprendre une pluralité de plans 44a, 44b, 44c et 44d comprenant des fibres. L'exemple illustré à la figure 6 comprend en particulier 4 plans, pourvus chacun de fibres rectangulaires ou rondes et inclinées à +/-45° par rapport à l'axe longitudinal XX'. Plus particulièrement, les fibres de deux plans successifs sont orientées selon deux angles différents, et sont notamment perpendiculaires d'un plan à l'autre.

Selon une troisième variante, le filtre 70 peut présenter des variations d'épaisseur et/ou de porosité au niveau des ouvertures distributrices.

De manière avantageuse, l'au moins une chambre de distribution 40 est obturée au niveau de la deuxième extrémité 12, tandis que l'au moins une chambre de collecte 50 est obturée au niveau de la première extrémité 11. À cet égard, tel qu'illustré à la figure 1, la chambre de distribution 40 est obturée par une paroi de distribution 43, tandis que la chambre de collecte 50 est obturée par une paroi de collecte 53.

De manière complémentaire, le réacteur tubulaire 1 peut comprendre au niveau de la première extrémité 11 et au niveau de la deuxième extrémité 12, respectivement, un espace distributeur 13 et un espace collecteur 14 entre lesquels l'insert creux 20 est disposé.

De manière avantageuse, l'ouverture collectrice 52 et les ouvertures distributrices 42 présentent une largeur comprise entre 1/100 et 1/2, avantageusement comprise entre 1/20 et 1/4, du diamètre du tube creux 10.

Ainsi, lors du fonctionnement du réacteur, un ou des gaz réactifs sont admis dans la chambre de distribution 40 par l'ouverture d'admission 41. Ces gaz passent ensuite au travers des ouvertures de distributrices 42 associées à ladite chambre de distribution, et s'écoulent dans l'espace annulaire 30 afin d'être mis en contact avec le lit de poudre catalytique. Lors de cet écoulement dans l'espace annulaire les gaz réactifs sont convertis, au moins en partie, en produits. Ces derniers, ainsi que la fraction de gaz réactifs n'ayant pas réagi, passent au travers de l'ouverture collectrice ainsi considérée et sont collectés dans la chambre de collecte. Les produits et les gaz réactifs n'ayant pas réagi ainsi collectés sont ensuite évacuées par l'ouverture d'évacuation 51.

Ainsi, l'étendue des ouvertures de distribution sur la longueur L permet de distribuer les gaz réactifs dans l'espace annulaire sur ladite longueur L. En d'autres termes, cet agencement permet de distribuer la quantité de chaleur susceptible d'être produite lors de la conversion des gaz réactifs en produits sur toute la longueur L. Cet agencement permet ainsi de limiter l'augmentation de température locale du lit de poudre catalytique. L'étendue sur la longueur L des ouvertures de collecte permet, selon un principe équivalent, de limiter l'échauffement du lit de poudre catalytique.

Par ailleurs, la disposition des ouvertures d'admission 41 et d'évacuation 51 sur des extrémités opposées de l'insert creux contribue également à une meilleure distribution des réactifs au sein de l'espace annulaire 30 et par voie de conséquence à une meilleure homogénéisation de la température du lit de poudre catalytique.

Tous ces aspects contribuent à limiter l'apparition de points chauds et ainsi préserver le lit de poudre catalytique. II en résulte une meilleure fiabilité du réacteur tubulaire et une augmentation de sa durée de vie.

Selon un aspect particulièrement avantageux illustré à la figure 7, la poudre catalytique est retenue dans l'espace annulaire 30 par un joint 31 en matière fibreuse au niveau de chacune des extrémités dudit espace annulaire 30.

Dans la mesure où le joint est en matière fibreuse, ce dernier est nécessairement poreux et donc perméable aux gaz réactifs.

La matière fibreuse peut à cet égard comprendre au moins un des éléments choisi parmi : fibre de verre, fibre de céramique, fibre de métal, fibre de carbone, fibre de matériau polymère.

Le joint 31 peut notamment être sous forme d'une tresse, d'une gaine, d'une cordelette ou simplement comprendre un bourrage de la matière fibreuse.

La matière fibreuse est avantageusement un isolant thermique et présente une conductivité thermique sensiblement équivalente à celle du catalyseur utilisé (0,2 W/m/K à 10 W/m/K).

Selon un mode de réalisation avantageux, le joint 31 en matière fibreuse est maintenu en compression contre la poudre catalytique par un ressort 32. Par exemple, le ressort 32 est en butée contre une plaque de maintien 33 lié mécaniquement au tube par une bague 34.

Le joint 31 en matière fibreuse en combinaison avec le ou les ressorts permet de mieux compacter la poudre catalytique et de prévenir l'attrition de cette dernière lors de la manipulation ou le transport du réacteur.

Dans la mesure où le joint 31 est poreux, les gaz réactifs peuvent pénétrer dans l'espace annulaire directement sans passer par la chambre de distribution 40.

Dans ce cas de figure (figure 7), il est particulièrement avantageux de prévoir un agencement de l'insert creux 20 permettant d'imposer à ce gaz réactif un chemin de parcours prédéterminé dans l'espace annulaire afin de favoriser sa conversion au contact du lit de poudre catalytique. Ce parcours prédéterminé est d'une longueur comprise entre 0,2 fois et 10 fois, avantageusement comprise entre 1 fois et 2 fois, le parcours réactif défini en relation avec la figure.

À cette fin, la deuxième paroi 21 peut être dépourvue d'ouvertures sur une première section 21a et une deuxième section qui s'étendent à partir, respectivement, de la première extrémité 11 et de la deuxième extrémité 12.

À cet égard la première section 21a et la deuxième section sont en recouvrement avec le lit de poudre sur une hauteur 1-11. La hauteur H1 étant comprise entre 0,5 fois et 10 fois, avantageusement entre une fois et 2 fois, le parcours réactif.

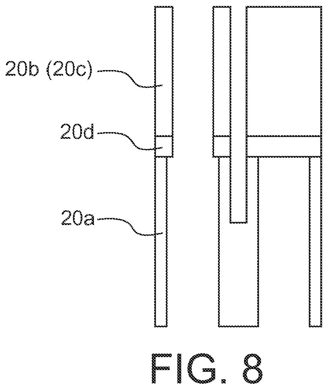

La figure 8 représente un insert creux 20 susceptible d'être mis en oeuvre selon un autre exemple de la présente invention. Cet autre exemple reprend pour l'essentiel les caractéristiques présentées précédemment.

L'insert 20 relatif à cet autre exemple peut être fabriqué par usinage, par découpage, par électroérosion, par extrusion.

En particulier, l'insert 20 comprend, selon cet autre exemple, un corps principal 20a intercalé entre deux corps terminaux 20b, et assemblés au moyen d'un joint 20d.

Les deux corps terminaux 20b, illustrés à la figure 8, comprennent une paroi cylindrique non perméable au gaz reproduisant la première section 21a décrite précédemment, et comprend des ouvertures de distribution 41 (ou de collecte 51).

Le réacteur tubulaire selon la présente invention est avantageusement mis en œuvre pour la synthèse du méthane, du méthanol, du diméthyléther ou encore pur mettre en oeuvre la synthèse de Fisher-Tropsch.

## Revendications

1. Réacteur tubulaire (1) à lit fixe qui s'étend, selon un axe longitudinal XX', entre une première extrémité (11) et une deuxième extrémité (12), ledit réacteur comprend un lit de poudre catalytique confiné dans un espace annulaire (30) délimité par une paroi interne, dite première paroi (15), d'un tube creux (10) et une paroi externe, dite une deuxième paroi (21), d'un insert creux (20) disposé de manière coaxiale dans le tube creux (10),
l'insert creux (20) comprend au moins une chambre de distribution (40) et au moins une chambre de collecte (50), séparées l'une de l'autre par au moins une paroi séparatrice (60), et comprenant, respectivement, une ouverture d'admission (41) de gaz au niveau de la première extrémité (11) et une ouverture d'évacuation (51) de gaz au niveau de la deuxième extrémité (12),
l'au moins une chambre de distribution (40) est pourvue d'une pluralité d'ouvertures distributrices (42) tandis que l'au moins une chambre de collecte (50) est pourvue d'une ouverture collectrice (52), la pluralité d'ouvertures distributrices (42) et l'ouverture collectrice (52) de chaque chambre de collecte (50) sont formées au niveau de la deuxième paroi (21) et s'étendent parallèlement à l'axe longitudinal XX', les ouvertures distributrices d'une chambre de distribution (40) permettant la distribution d'un gaz susceptible d'être admis par l'ouverture d'admission (41) de ladite chambre de distribution (40) vers l'espace annulaire (30) et l'ouverture collectrice (52) permettant la collecte du gaz distribué dans l'espace annulaire (30) par la chambre de collecte (50).

2. Réacteur selon la revendication 1, dans lequel chaque ouverture distributrice de la pluralité des ouvertures distributrices de l'au moins une chambre de distribution (40) est conformée pour imposer une perte de charge au gaz susceptible d'être admis dans la chambre de distribution (40) de sorte que le débit dudit gaz soit fonction du parcours, dit parcours réactif, dudit gaz dans l'espace annulaire (30) entre l'ouverture distributrice considérée et l'ouverture collectrice (52).

3. Réacteur selon la revendication 2, dans lequel la perte de charge augmente lorsque le parcours réactif diminue.

4. Réacteur selon la revendication 3, dans lequel la perte de charge associée à une ouverture distributrice (42) donnée est ajustée par sa section et/ou sa longueur.

5. Réacteur selon la revendication 3 ou 4, dans lequel un élément poreux est logé dans l'ouverture distributrice, l'élément poreux présentant une porosité permettant d'imposer la perte de charge.

6. Réacteur selon la revendication 5, dans lequel l'élément poreux peut comprendre au moins des matériaux choisi parmi : un matériau fibreux, notamment une laine, une tresse ou un tissu métallique ou céramique.

7. Réacteur selon l'une des revendications 3 à 6, dans lequel ledit réacteur est pourvu d'un film poreux en recouvrement de la deuxième paroi (21), et agencé pour prévenir un passage de poudre du lit de poudre catalytique à travers les ouvertures distributrices ou l'ouverture collectrice (52).

8. Réacteur selon l'une des revendications 1 à 7, dans lequel l'au moins une chambre de distribution (40) est obturée au niveau de la deuxième extrémité (12), et l'au moins une chambre de collecte (50) est obturée au niveau de la première extrémité (11).

9. Réacteur selon l'une des revendications 1 à 8, dans lequel ledit réacteur comprend au niveau de la première extrémité (11) et au niveau de la deuxième extrémité (12), respectivement, un espace distributeur et un espace collecteur entre lesquels l'insert est disposé.

10. Réacteur selon l'une des revendications 1 à 3, dans lequel la poudre catalytique est retenue dans l'espace annulaire (30) par un joint en matière fibreuse au niveau de chacune des extrémités de l'espace annulaire (30), avantageusement, le joint en matière fibreuse est maintenu en compression contre la poudre catalytique par un ressort, le ressort étant en butée contre une plaque de maintien lié mécaniquement du tube.

11. Réacteur selon l'une des revendications 1 à 10, dans lequel la deuxième paroi (21) est dépourvue d'ouverture sur une première section et une deuxième section qui s'étendent à partir, respectivement, de la première extrémité (11) et de la deuxième extrémité (12), la première section et la deuxième section étant en recouvrement avec le lit de poudre sur une hauteur H1, la hauteur H1 étant comprise entre 0,2 fois et 10 fois, avantageusement comprise entre 1 fois et 2 fois, la distance D₁ séparant une ouverture de distribution d'une ouverture collectrice (52) immédiatement adjacente, et mesurée le long de la surface externe de la paroi externe.

12. Réacteur selon l'une des revendications 1 à 11, dans lequel l'insert creux (20) est muni de moyens de centrage maintenant ce dernier en position coaxiale avec le tube creux (10), de manière avantageuse, les moyens de centrage comprennent des bossages formés sur la deuxième paroi (21).

13. Réacteur selon l'une des revendications 1 à 12, dans lequel l'ouverture collectrice (52) et les ouvertures de distributrices présentent une largeur comprise entre 1/100 et 1/2, avantageusement comprise entre 1/20 et 1/4, du diamètre du tube creux (10).

14. Réacteur selon l'une des revendications 1 à 13, dans lequel l'insert creux (20) forme une pièce monobloc.

## Patentansprüche

1. Festbett-Rohrreaktor (1), der sich entlang einer Längsachse XX' zwischen einem ersten Ende (11) und einem zweiten Ende (12) erstreckt, wobei der Reaktor ein Katalysatorpulverbett umfasst, das in einem ringförmigen Raum (30) eingeschlossen ist, der von einer als erste Wand (15) bezeichneten Innenwand eines hohlen Rohres (10) und einer als zweite Wand (21) bezeichneten Außenwand eines hohlen Einsatzes (20), der koaxial in dem hohlen Rohr (10) angeordnet ist, begrenzt wird,
wobei der hohle Einsatz (20) mindestens eine Verteilkammer (40) und mindestens eine Sammelkammer (50) umfasst, die durch mindestens eine Trennwand (60) voneinander getrennt sind und jeweils eine Gaseinlassöffnung (41) im Bereich des ersten Endes (11) und eine Gasauslassöffnung (51) im Bereich des zweiten Endes (12) umfassen,
wobei die mindestens eine Verteilkammer (40) mit einer Vielzahl von Verteilöffnungen (42) versehen ist, während die mindestens eine Sammelkammer (50) mit einer Sammelöffnung (52) versehen ist, wobei die Vielzahl von Verteilöffnungen (42) und die Sammelöffnung (52) jeder Sammelkammer (50) im Bereich der zweiten Wand (21) gebildet sind und sich parallel zur Längsachse XX' erstrecken, wobei die Verteilöffnungen einer Verteilkammer (40) das Verteilen eines Gases, das durch die Einlassöffnung (41) eingelassen werden kann, von der Verteilkammer (40) zu dem ringförmigen Raum (30) hin ermöglichen und wobei die Sammelöffnung (52) das Sammeln des in dem ringförmigen Raum (30) verteilten Gases durch die Sammelkammer (50) ermöglicht.

2. Reaktor nach Anspruch 1, wobei jede Verteilöffnung der Vielzahl von Verteilöffnungen der mindestens einen Verteilkammer (40) so gestaltet ist, dass sie dem Gas, das in die Verteilkammer (40) eingelassen werden kann, einen Druckverlust aufzwingt, sodass der Durchsatz des Gases von dem als Reaktionsweg bezeichneten Weg des Gases in dem ringförmigen Raum (30) zwischen der betreffenden Verteilöffnung und der Sammelöffnung (52) abhängig ist.

3. Reaktor nach Anspruch 2, wobei der Druckverlust zunimmt, wenn der Reaktionsweg abnimmt.

4. Reaktor nach Anspruch 3, wobei der einer gegebenen Verteilöffnung (42) zugeordnete Druckverlust über ihren Querschnitt und/oder ihre Länge angepasst wird.

5. Reaktor nach Anspruch 3 oder 4, wobei ein poröses Element in der Verteilöffnung untergebracht ist, wobei das poröse Element eine Porosität aufweist, die es ermöglicht, den Druckverlust zu erzwingen.

6. Reaktor nach Anspruch 5, wobei das poröse Element mindestens Materialien umfassen kann, ausgewählt aus: einem Fasermaterial, insbesondere eine Wolle, einem Geflecht oder einem Metall- oder Keramikgewebe.

7. Reaktor nach einem der Ansprüche 3 bis 6, wobei der Reaktor mit einem porösen Film versehen ist, der die zweite Wand (21) bedeckt und so eingerichtet ist, dass er einen Durchtritt von Pulver aus dem Katalysatorpulverbett durch die Verteilöffnungen oder die Sammelöffnung (52) verhindert.

8. Reaktor nach einem der Ansprüche 1 bis 7, wobei die mindestens eine Verteilkammer (40) im Bereich des zweiten Endes (12) verschlossen ist und die mindestens eine Sammelkammer (50) im Bereich des ersten Endes (11) verschlossen ist.

9. Reaktor nach einem der Ansprüche 1 bis 8, wobei der Reaktor im Bereich des ersten Endes (11) und im Bereich des zweiten Endes (12) jeweils einen Verteilraum und einen Sammelraum umfasst, zwischen denen der Einsatz angeordnet ist.

10. Reaktor nach einem der Ansprüche 1 bis 3, wobei das Katalysatorpulver von einer Dichtung aus Fasermaterial im Bereich jedes der Enden des ringförmigen Raums (30) in dem ringförmigen Raum (30) zurückgehalten wird, wobei vorteilhafterweise die Dichtung aus Fasermaterial von einer Feder unter Druck am Katalysatorpulver gehalten wird, wobei sich die Feder an einer mechanisch verbundenen Halteplatte des Rohrs in Anschlag befindet.

11. Reaktor nach einem der Ansprüche 1 bis 10, wobei die zweite Wand (21) an einem ersten Abschnitt und einem zweiten Abschnitt, die sich jeweils ab dem ersten Ende (11) und dem zweiten Ende (12) erstrecken, keine Öffnung aufweist, wobei der erste Abschnitt und der zweite Abschnitt das Pulverbett auf einer Höhe H1 bedecken, wobei die Höhe H1 im Bereich zwischen dem 0,2-Fachen und 10-Fachen, vorteilhafterweise im Bereich zwischen dem 1-Fachen und 2-Fachen, des Abstands D₁ beträgt, der eine Verteilöffnung von einer unmittelbar angrenzenden Sammelöffnung (52) trennt, und entlang der Außenfläche der Außenwand gemessen wird.

12. Reaktor nach einem der Ansprüche 1 bis 11, wobei der hohle Einsatz (20) mit Zentriermitteln ausgestattet ist, die diesen letzteren in koaxialer Position mit dem hohlen Rohr (10) halten, wobei die Zentriermittel vorteilhafterweise Erhebungen umfassen, die an der zweiten Wand (21) gebildet sind.

13. Reaktor nach einem der Ansprüche 1 bis 12, wobei die Sammelöffnung (52) und die Verteilöffnungen eine Breite im Bereich zwischen 1/100 und 1/2, vorteilhafterweise im Bereich zwischen 1/20 und 1/4, des Durchmessers des hohlen Rohrs (10) aufweisen.

14. Reaktor nach einem der Ansprüche 1 bis 13, wobei der hohle Einsatz (20) ein einstückiges Teil bildet.

## Claims

1. A fixed-bed tubular reactor (1) which extends, according to a longitudinal axis XX', between a first end (11) and a second end (12), said reactor comprises a catalytic powder bed confined in an annular space (30) delimited by an inner wall, called first wall (15), of a hollow tube (10) and an outer wall, called second wall (21), of a hollow insert (20) disposed coaxially in the hollow tube (10),
the hollow insert (20) comprises at least one distribution chamber (40) and at least one collection chamber (50), separated from each other by at least one partition wall (60), and comprising, respectively, a gas intake opening (41) at the first end (11) and a gas discharge opening (51) at the second end (12),
the at least one distribution chamber (40) is provided with a plurality of distributing openings (42) whereas the at least one collection chamber (50) is provided with a collecting opening (52), the plurality of distributing openings (42) and the collecting opening (52) of each collection chamber (50) are formed at the second wall (21) and extend parallel to the longitudinal axis XX', the distributing openings of a distribution chamber (40) enabling the distribution of a gas capable of being admitted through the intake opening (41) from said distribution chamber (40) towards the annular space (30) and the collecting opening (52) enabling the collection of the gas distributed in the annular space (30) by the collection chamber (50).

2. The reactor according to claim 1, wherein each distributing opening of the plurality of distributing openings of the at least one distribution chamber (40) is shaped so as to impose a pressure drop on the gas likely to be admitted into the distribution chamber (40) so that the flow rate of said gas depends on the path, called reactive path, of said gas in the annular space (30) between the considered distributing opening and the collecting opening (52).

3. The reactor according to claim 2, wherein the pressure drop increases when the reactive path decreases.

4. The reactor according to claim 3, wherein the pressure drop associated with a given distributing opening (42) is adjusted by its section and/or its length.

5. The reactor according to claim 3 or 4, wherein a porous element is accommodated within the distributing opening, the porous element having a porosity allowing imposing the pressure drop.

6. The reactor according to claim 5, wherein the porous element may comprise at least materials selected from among: a fibrous material, in particular wool, a braid or a metal or ceramic fabric.

7. The reactor according to one of claims 3 to 6, wherein said reactor is provided with a porous film covering the second wall (21), and arranged so as to prevent the passage of powder from the catalytic powder bed through the distributing openings or the collecting opening (52).

8. The reactor according to one of claims 1 to 7, wherein the at least one distribution chamber (40) is sealed at the second end (12), and the at least one collection chamber (50) is sealed at the first end (11).

9. The reactor according to one of claims 1 to 8, wherein said reactor comprises, at the first end (11) and at the second end (12), respectively, a distributing space and a collecting space between which the insert is disposed.

10. The reactor according to one of claims 1 to 3, wherein the catalytic powder is retained in the annular space (30) by a seal made of fibrous material at each of the ends of the annular space (30), advantageously, the seal made of fibrous material is held in compression against the catalytic powder by a spring, the spring abutting against a mechanically-linked holding plate of the tube.

11. The reactor according to one of claims 1 to 10, wherein the second wall (21) has no opening on a first section and a second section which extend from, respectively, the first end (11) and the second end (12), the first section and the second section overlapping with the powder bed over a height H1, the height H1 being comprised between 0.2 times and 10 times, advantageously comprised between 1 times and 2 times, the distance D₁ separating a distributing opening from an immediately adjacent collecting opening (52), and measured along the outer surface of the outer wall.

12. The reactor according to one of claims 1 to 11, wherein the hollow insert (20) is provided with centring means holding the latter in a position coaxial with the hollow tube (10), advantageously, the centring means comprise bosses formed on the second wall (21).

13. The reactor according to one of claims 1 to 12, wherein the collecting opening (52) and the distributing openings have a width comprised between 1/100 and 1/2, advantageously comprised between 1/20 and 1/4, of the diameter of the hollow tube (10).

14. The reactor according to one of claims 1 to 13, wherein the hollow insert (20) forms a single-piece part.
